# EUROPÄISCHE PATENTSCHRIFT

(11) **EP 2 870 054 B1**
(45) Veröffentlichungstag und Bekanntmachung des Hinweises auf die Patenterteilung: **15.05.2019**
(21) Anmeldenummer: 13734712.6
(22) Anmeldetag: 29.06.2013
(51) Int. Cl.: B60R 16/027, G01D 5/244, G01D 11/24

(54) **DREHWINKELSENSOR**
ANGULAR POSITION SENSOR
CAPTEUR D'ANGLE DE ROTATION

(30) Priorität: 04.07.2012 DE 102012105966
(43) Veröffentlichungstag der Anmeldung: 13.05.2015
(73) Patentinhaber: HELLA GmbH & Co. KGaA, 59552 Lippstadt (DE)
(72) Erfinder: ELPERMANN, Thomas, 48291 Telgte (DE); PETERS, Stefan, 59557 Lippstadt (DE)
(86) Internationale Anmeldenummer: PCT/EP2013/063761
(87) Internationale Veröffentlichungsnummer: WO 2014/005962

(56) Entgegenhaltungen:
- EP-A2- 2 011 697
- US-A- 5 674 081

## Beschreibung

Die Erfindung betrifft einen Drehwinkelsensor zur Bestimmung einer relativen Winkelstellung bezüglich einer Referenzposition, umfassend ein Gehäuse, mindestens einen Rotor, der drehbar in dem Gehäuse gelagert ist und eine Leiterplatte mit elektrischen und/oder elektronischen Bauteilen sowie einem oder mehreren Statoren entsprechend der Anzahl der Rotoren, wobei das Gehäuse mittels eines Verbindungsbauteils gegen Verdrehen in einer Nut eines feststehendes Teil eines Kraftfahrzeugs gesichert ist.

Solche induktive Drehmomentsensoren sind an sich bekannt. Sie werden z.B. in Kraftfahrzeugen eingesetzt, um Drehmomente wie Lenkmomente zu ermitteln. Dies wird zunehmend erforderlich, weil vermehrt elektromotorische Servoeinrichtungen zur Lenkhilfe eingesetzt werden. Diese benötigen das Lenkmoment zur Steuerung. Die Lenkmomente werden in einer Lenksäule durch einen Torsionsstab in Differenzwinkeln erkennbar und aus diesen berechnet. Hierfür werden die Verdrehungen an den Enden des Torsionsstabs mittels einer geeigneten Anordnung als Signale bestimmt und in Mittel zum Auswerten geleitet. Die Differenzwinkel, die durch die Torsion bewirkt werden, sind unabhängig von einer Stellung des Lenkrads zu bestimmen.

Weiterhin ist es z.B. für Fahrerassistenzsysteme wie ESP (elektronisches Stabilitätsprogramm für das Fahrverhalten des Fahrzeugs) wichtig, ebenfalls die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet, die für jede vollständige Umdrehung des Lenkrads ein Signal erzeugt und so eine Anzahl der Umdrehungen bestimmt. Es sind auch andere Bestimmungsarten möglich.

Es ist bekannt, den oder die Rotoren an einer Lenksäule zu befestigen, während Statoren auf einer Leiterplatte in einem Gehäuse angeordnet sind, das drehfest in dem Kraftfahrzeug gelagert ist. Um die Drehfestigkeit zu erreichen, wird z.B. ein an dem Kunststoff- Gehäuse angeformtes Verbindungsbauteil in einer Nut geführt, die in einen in dem Kraftfahrzeug fest eingebauten Körper eingelassen ist. Zum Ausgleich von Fertigungstoleranzen, Spiel und Verschleiß ist an dem Verbindungsbauteil eine Feder aus demselben Material wie das Gehäuse ausgebildet. Dies hat den Nachteil, dass bei höheren Temperaturen die Federkraft nachlässt und so das Gehäuse einem - wenn auch geringen - rotatorischem Spiel unterliegt und daher die Genauigkeit des Sensors negativ beeinflusst wird.
Vergleichbare Mittel zur Herstellung einer Drehfestigkeit sind z.B. in der EP 2 011 697 A2 und in der DE102007055392 A1 für ein Wickelband beschrieben.

Es ist die Aufgabe der Erfindung, einen Drehwinkelsensor zu schaffen, der unter allen möglichen Betriebsbedingungen eine spielfreie Verdrehsicherung eines Gehäuses bei einfacher Montage erlaubt.

Die Aufgabe ist durch die Merkmale des Anspruchs 1 gelöst. Eine Kunststofffeder des Verbindungsbauteils ist durch eine Metallfeder unterstützt. Hierdurch ist auch bei hohen Temperaturen, bei denen der Kunststoff weicher wird und die Kunststofffeder nicht mehr die volle Spannkraft aufweist, ein ausreichender Druck der Kunststofffeder auf die Nut gewährleistet. Daher ist das Verbindungsteil immer ausreichend in der Nut verspannt, so dass das Gehäuse rotatorisch spielfrei ist. Hierdurch ist stets eine sehr hohe Genauigkeit des Drehwinkelsensors gegeben. Eine gleitende Bewegung des Verbindungsteils und damit des Gehäuses längs der Nut ist dagegen ermöglicht. Dadurch dass lediglich Kunststoffteile die Nut kontaktieren, wird eine Geräuschentwicklung bei den Längsbewegungen vermieden.

Der Unteranspruch beschreibt die vorteilhafte Ausgestaltung der Erfindung.

In einer Ausgestaltung ist die Metallfeder eine gebogene Blattfeder. Diese lässt sich besonders einfach herstellen und einfach und sicher montieren.

Anhand der beigefügten Zeichnung wird die Erfindung nachfolgend näher erläutert. Dabei zeigen:
- Figur 1: eine Explosionsdarstellung eines Drehwinkelsensors,
- Figur 2: eine perspektivische Ansicht eines Verbindungsbauteils als Detail,
- Figur 3: einen senkrechten Schnitt durch das Verbindungsbauteil und
- Figur 4: eine Draufsicht auf einen Teil des Drehwinkelsensors und einen Körper.

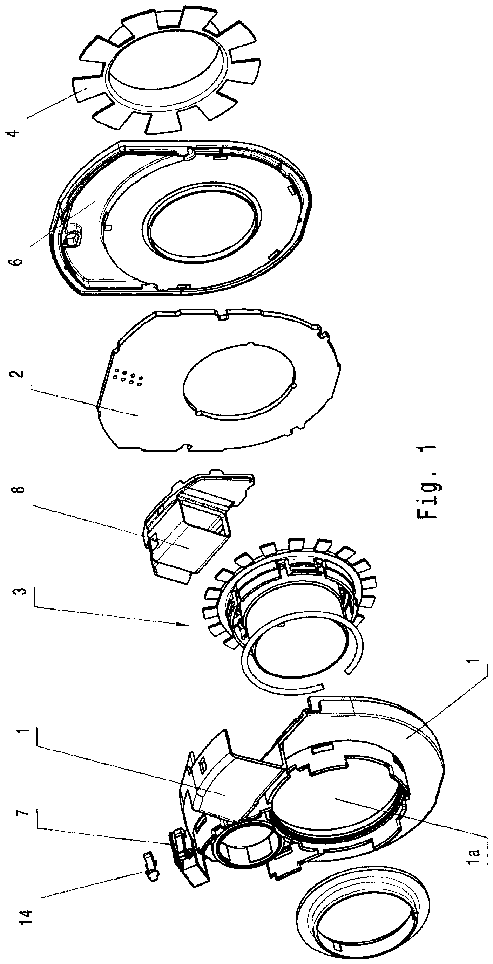

Wie aus der Figur 1 ersichtlich umfasst ein Drehwinkelsensor ein Gehäuse 1, in beziehungsweise an dem eine Leiterplatte 2 befestigt sowie zwei Rotoren 3, 4 drehbar gelagert sind. Die zwei Hauptflächen des Gehäuses 1 sind mit jeweils einem Deckel 6 verschlossen, wovon einer nicht dargestellt ist. Der Drehwinkelsensor ist z.B. in einem Kraftfahrzeug einer Lenksäule zugeordnet, wobei die Rotoren 3, 4 mit dieser mitdrehen. Das Gehäuse 1 weist eine entsprechende kreisförmige Öffnung 1a auf, die in etwa zentrisch angeordnet ist. Zum Befestigen des Gehäuses 1 an einem feststehenden Teil des Kraftfahrzeugs ist ein Verbindungsstück 7 angeordnet, damit das Gehäuse 1 relativ zu der Lenkbewegung rotatorisch unbeweglich ist.

Die Leiterplatte 2 weist den Rotoren 3, 4 zugeordnete Statoren in Form von z.B. Leiterbahnen sowie elektrische und/oder elektronische Bauteile auf. Die Statoren sind konzentrisch um eine im Wesentlichen kreisförmige Aussparung in der Leiterplatte 2 angeordnet, wobei die Aussparung mit der Öffnung 1a fluchtet. Die Leiterplatte 2 ist genau in einer vorbestimmten Position in dem Gehäuse 1 fixiert, um hier Messfehler zu vermeiden. An der Leiterplatte 3 ist ein Stecker 8 befestigt und elektrisch angeschlossen, der bei montiertem Drehwinkelsensor an dem Gehäuse 1 gehalten ist.

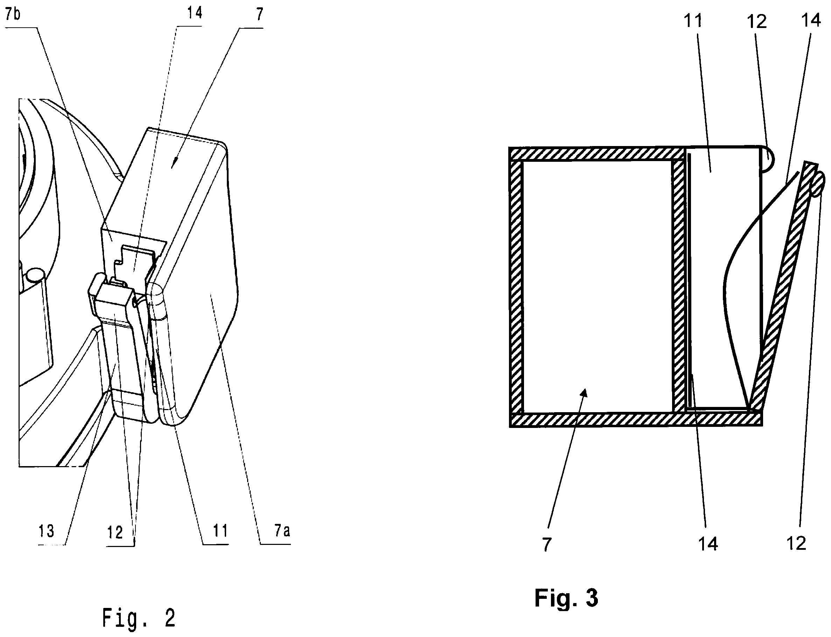

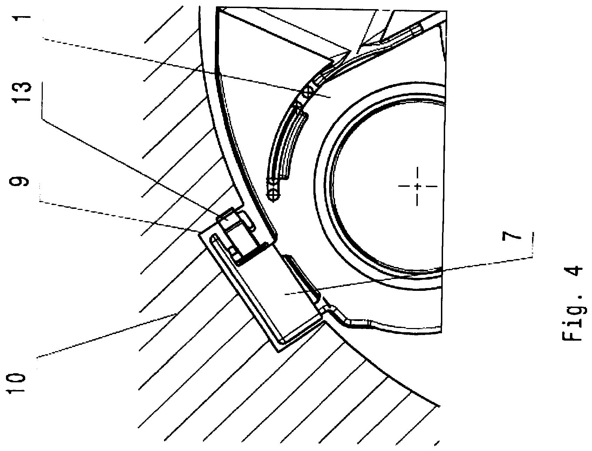

Das Verbindungsstück 7, das in den Figuren 2 bis 4 deutlicher dargestellt ist, ist an den Außenumfang des Gehäuses 1 angeformt und einstückig mit diesem gebildet. Das Verbindungsstück 7 ist im Wesentlichen quaderförmig und so angeordnet, dass eine radial äußere Wand 7a senkrecht zu einem Radius der Öffnung 1a ist. Abmessungen des Verbindungsstücks 7 sind mit denen einer Nut 9 abgestimmt, die in einen an dem Kraftfahrzeug befestigten Körper 10 eingelassen ist. Der Körper 10 umgibt den Drehwinkelsensor radial zu der Öffnung 10a zumindest teilweise.
An einer Breitseite 7b, die senkrecht zu der äußeren Wand 7a ist, sind zwei Stege 11 als Bestandteil des Verbindungsstücks 7 angeordnet. Die Stege 11 sind beabstandet so an die Breitseite 7b angeformt, dass sie wandartig senkrecht aus der Fläche der Breitseite 7b herausragen, wobei ein äußerer der Stege 11 als Verlängerung der äußeren Wand 7a gebildet ist. An einem oberen Ende jedes der Stege 11 ist ein Nocken 12 ausgebildet, der von der Breitseite 7b weg weist.
Zwischen den Stegen 11 ist eine Kunststofffeder 13 so angeordnet, dass sie an ihrem unteren Ende an der Breitseite 7b befestigt ist und dass ein oberes Ende federnd beweglich ist. An dem oberen Ende der Kunststofffeder 13 ist ebenfalls ein Nocken 12 ausgebildet, der von der Breitseite 7b weg weist und sich zwischen den anderen Nocken 12 befindet. In entspanntem Zustand weist die Kunststofffeder 13 aus einer Ebene heraus, die die Nocken 12 der Stege 11 berührend parallel zu der Breitseite 7b ist. Die Kunststofffeder 13 ist durch eine Metallfeder 14 verstärkt, die zwischen der Breitseite 7b und der Kunststofffeder 12 geführt und klemmend sowie formschlüssig befestigt ist. Die Metallfeder 14 ist als Blattfeder aus Federblech ähnlich einem U geformt, wobei ein erster der Schenkel des U bogenförmig gebogen ist, so dass eine konvexe Seite zu dem anderen Schenkel und ein freies Ende des ersten Schenkels zu der Kunststofffeder 13 weist.

Das Gehäuse 1 ist mit dem Verbindungsstück 7 einschließlich der Stege 11 und der Kunststofffeder 13 einstückig aus Kunststoff gespritzt.

Nach der Montage des Drehwinkelsensors in das Kraftfahrzeug ist das Verbindungsstück 7 längs verschiebbar in der Nut 9 geführt, so dass das Gehäuse 1 rotatorisch fest ist. Die Kunststofffeder 13 in Verbindung mit der Metallfeder 14 gleicht ein zwischen der Nut 9 und dem Verbindungsstück 7 vorhandenes Spiel auch bei hohen Temperaturen sicher aus, so dass Messfehler infolge unerwünschter Drehbewegungen des Gehäuses 1 vermieden werden.

### Bezugszeichenliste

- 1: Gehäuse
- 1a: Öffnung
- 2: Leiterplatte
- 3: erster Rotor
- 4: zweiter Rotor
- 5 6: Deckel
- 7: Verbindungsbauteil
- 7a: Äußere Wand
- 7b: Breitseite
- 8: Stecker
- 9: Nut
- 10: Körper
- 11: Steg
- 12: Nocken
- 13: Kunststofffeder
- 14: Metallfeder

## Patentansprüche

1. Drehwinkelsensor zur Bestimmung einer relativen Winkelstellung bezüglich einer Referenzposition, umfassend
ein Gehäuse (1),
mindestens einen Rotor (3, 4), der drehbar in dem Gehäuse (1) gelagert ist und
eine Leiterplatte (2) mit elektrischen und/oder elektronischen Bauteilen sowie einem oder mehreren Statoren entsprechend der Anzahl der Rotoren (3, 4), wobei das Gehäuse (1) mittels eines Verbindungsbauteils (7) gegen Verdrehen in einer Nut (9) eines feststehenden Körpers (10) eines Kraftfahrzeugs gesichert ist,
**dadurch gekennzeichnet, dass**
eine Kunststofffeder (13) des Verbindungsbauteils (7) durch eine Metallfeder (14) unterstützt ist,
wobei das Verbindungsteil (7) längs verschiebbar in der Nut (9) geführt ist.

2. Drehwinkelsensor nach Anspruch 1, **dadurch gekennzeichnet, dass** die Metallfeder (14) eine gebogene Blattfeder ist.

## Claims

1. Rotary angle sensor to determine a relative angle setting in relation to a refence position, comprising
a housing (1),
at least one rotor (3, 4) that is mounted on a bearing in the housing such that it can rotate
and
a printed circuit board (2) with electric and/or electronic components and one or more stators matching the number of rotors (3, 4), where the housing (1) is secured by a connecting component (7) against twisting in a slot (9) of a fixed body (10) of a motor vehicle,
**characterized by** the fact that
a plastic spring (13) of the connecting component (7) is supported by a metal spring (14),
where the connecting component (7) is guided in the slot (9) such that it can be moved longitudinally.

2. Rotary angle sensor according to claim (1) **characterized by the fact** that the metal spring (14) is a curved leaf spring.

## Revendications

1. Capteur de rotation pour la détermination d'une position angulaire relative portant sur une position de référence, comprenant un boîtier (1),
au minimum un rotor (3, 4) installé de façon mobile dans le boîtier (1)
et
une plaque conductrice (2) avec composants électriques et/ou électroniques ainsi qu'un ou plusieurs stators en fonction du nombre de rotors (3, 4) ; le boîtier (1) étant sécurisé contre la torsion dans une rainure (9) d'un corps fixe (10) d'un véhicule automobile au moyen d'un élément de raccord (7),
**caractérisé par le fait**
**qu'**une languette en plastique (13) de l'élément de raccord (7) est soutenue par un ressort métallique (14) ; l'élément de raccord (7) étant guidé dans la rainure (9) par coulissement latéral.

2. Capteur de rotation selon la revendication 1, **caractérisé par le fait que** le ressort métallique (14) est un ressort à lames incurvé.
